# EUROPEAN PATENT SPECIFICATION

(11) **EP 3 354 427 B1**
(45) Date of publication and mention of the grant of the patent: **12.02.2020**
(21) Application number: 18152302.8
(22) Date of filing: 18.01.2018
(51) Int. Cl.: B26D 7/08, B23Q 1/62, B23Q 11/00, B26F 1/38, C14B 5/00

(54) **STRUCTURE FOR MOVING TOOLS IN NUMERIC CONTROL MACHINES FOR THE WORKING OF RIGID AND SEMIRIGID PLANAR MATERIALS**
STRUKTUR ZUM BEWEGEN VON WERKZEUGEN IN NUMERISCH GESTEUERTEN MASCHINEN ZUR BEARBEITUNG VON STARREN UND HALBSTARREN FLACHMATERIALIEN
STRUCTURE POUR DÉPLACER DES OUTILS DANS DES MACHINES À COMMANDE NUMÉRIQUE POUR L'USINAGE DE MATÉRIAUX PLANS RIGIDES ET SEMI-RIGIDES

(30) Priority: 25.01.2017 IT 201700007671
(43) Date of publication of application: 01.08.2018
(73) Proprietor: Comelz S.p.A., 27029 Vigevano (IT)
(72) Inventor: ZORZOLO, Alessandro, 27029 VIGEVANO PV (IT)
(74) Representative: Modiano, Micaela Nadia

(56) References cited:
- EP-A1- 1 724 054
- WO-A1-2008/120096
- CA-A1- 2 344 960
- JP-A- H01 193 134
- JP-A- 2004 263 825

## Description

The present invention relates to a structure for moving tools in numeric control machines for the working of rigid and semirigid planar materials.

As is known, numeric control machine tools for cutting and other working of rigid and semirigid planar materials, such as sheets of plastic material, cellulose materials, textile materials or natural hides, adapted to move along a plane XY, on which the material to be worked is arranged, one or more tool heads provided with devices for cutting, shearing, marking, etc., are commercially widespread.

The tool heads are moved on the plane XY along working paths that are required according to a logic of highest possible efficiency in terms of capacity and quality of the work performed.

The tool heads are moved by supporting carriages which move transversely with respect to a supporting structure, which can be fixed or movable with respect to the working surface of the machine.

The heads and their corresponding support and movement carriages are therefore pushed by their own systems of axes which, due to inertial effect on the corresponding movement masses, produce forces which affect the supporting structures of said axes and accordingly the entire supporting structure of the machine. This causes vibrations and/or oscillations thereof, which increase as the working performance that one wishes to achieve increases.

If one wishes to increase the working performance, one obtains the unwanted effect of vibration and/or oscillation, which compromises the correct execution of the work (due to the relative displacement between the system of axes and the working surface), in addition to possibly damaging other parts and instruments that are present on the machine and complicate the interaction of the operator in the work area during the working activity of tools.

WO 2008/120096 discloses a structure as defined in the preamble of claim 1.

The aim of the present invention is to provide a structure for moving tools in numeric control machines for the working of rigid and semirigid planar materials that allows to mitigate greatly the effect of the vibrations and/or oscillations caused by the accelerations of the carriage, thus making it possible to increase the working performance of the machine on which the carriage is installed.

Within this aim, an object of the present invention is to provide a structure for moving tools in numeric control machines for the working of rigid and semirigid planar materials that allows a compensation of the vibrations and/or oscillations to which the carriage is subjected during the work performed by the machine on which the carriage is mounted.

Another object of the present invention is to provide a structure for moving tools in numeric control machines for the working of rigid and semirigid planar materials in order to compensate, at each instant, the force that is the result of the accelerations applied to the axes of the tool heads during working.

A still further object of the present invention is to provide a structure for moving tools in numeric control machines that is highly reliable, relatively simple to provide and at competitive costs.

This aim, as well as these and other objects which will become better apparent hereinafter, are achieved by a structure for moving tools in numeric control machines for the working of rigid and semirigid planar materials, as defined in claim 1.

Further characteristics and advantages of the invention will become better apparent from the description of a preferred but not exclusive embodiment of the structure for moving tools according to the present invention, illustrated by way of nonlimiting example in the accompanying drawings, wherein:

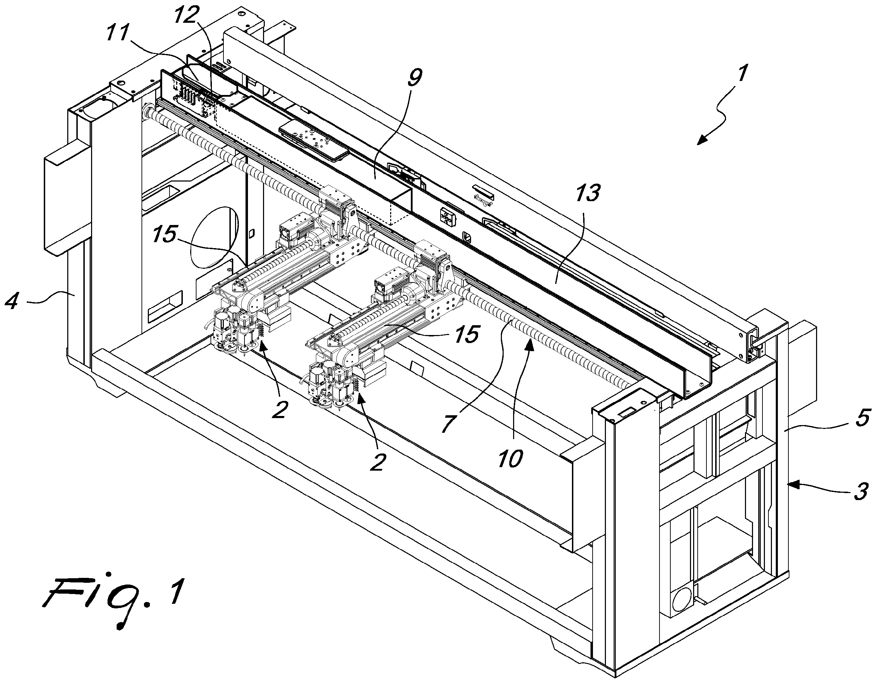

Figure 1 is a perspective view of a movement structure according to the present invention, adapted to be applied to a numeric control machine;

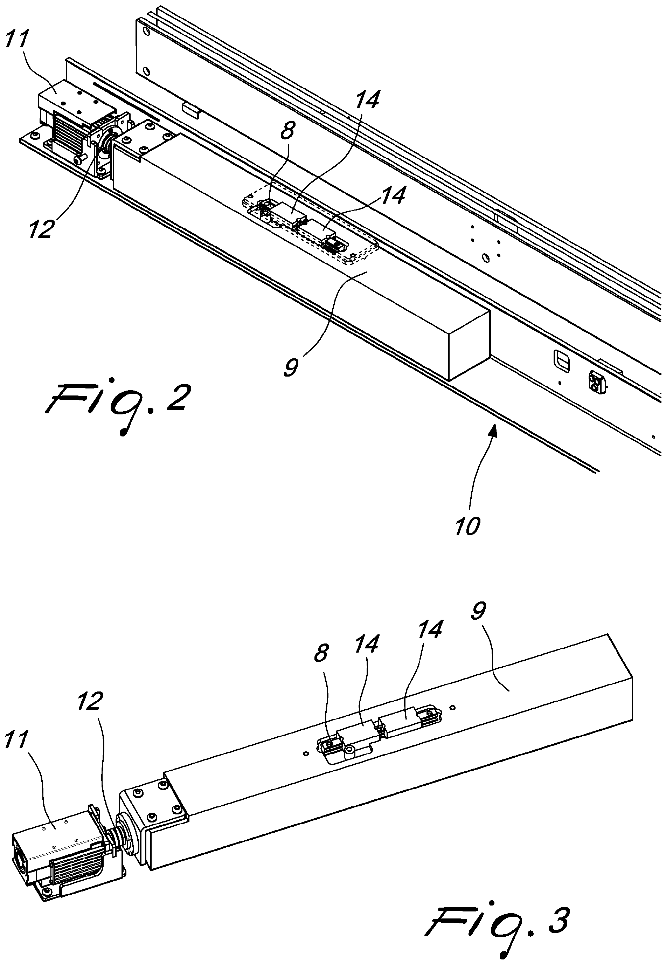

Figure 2 is a perspective view of a detail of the movement structure according to the invention;
Figure 3 is a perspective view of a further detail of the movement structure according to the present invention;

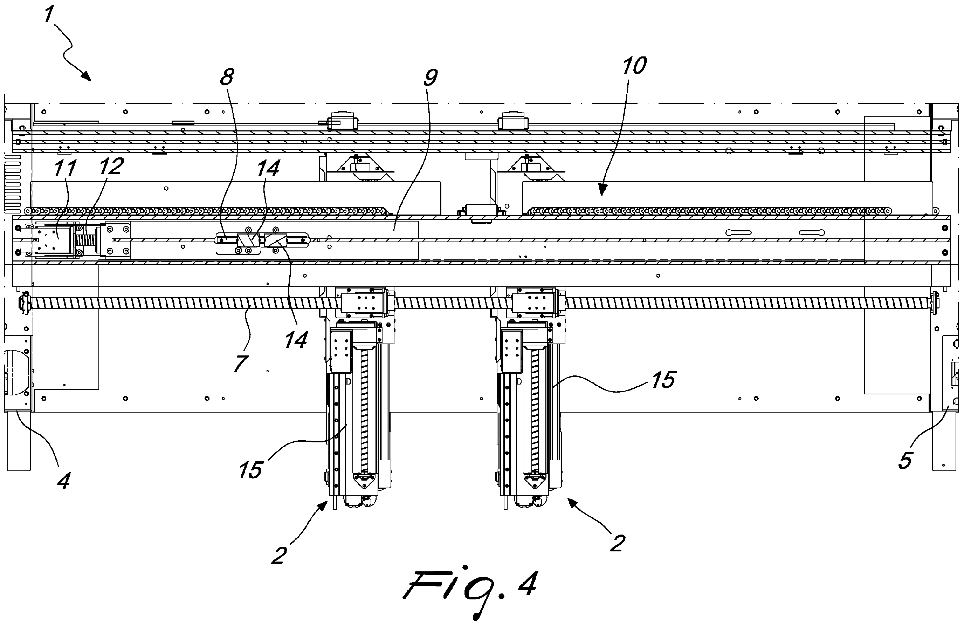

Figure 4 is a plan view of the bridge according to the present invention;

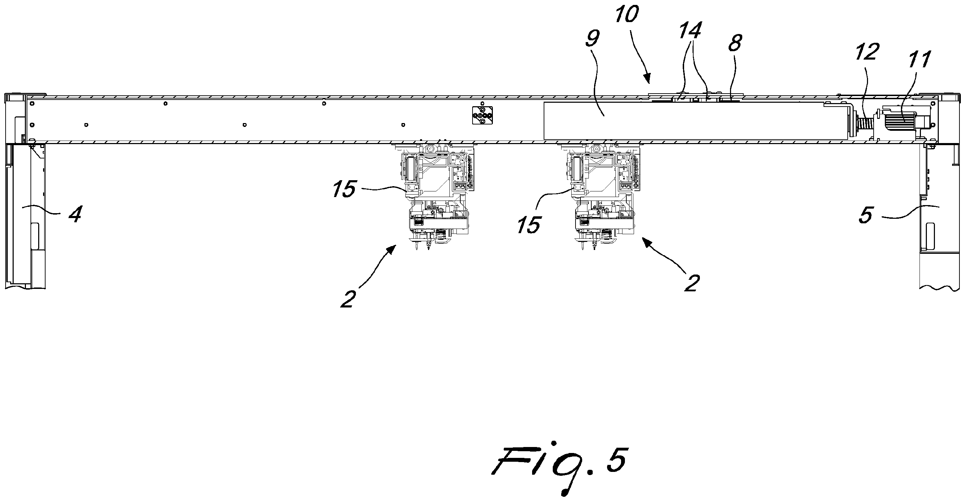

Figure 5 is a front view of the movement structure according to the present invention.

With reference to the figures, the movement structure according to the present invention, designated generally by the reference numeral 1, is designed to be installed on a numeric control machine for cutting and other works in a position that lies above a working surface of the machine.

Conveniently, the movement structure 1 comprises a supporting framework 3 that is adapted to be fixed to the machine (in this case, the movement structure 1 is fixed with respect to the working surface) or is adapted to be movable along respective guides with respect to said surface.

The supporting framework 3 supports a bridge 10, which is arranged transversely with respect to a pair of shoulders 4 and 5 of the supporting framework 3.

At least one arm 15, which supports a working tool head 2 provided with a working tool, can move slidingly in a transverse direction with respect to the supporting framework 3, along the bridge 10, and therefore transversely with respect to the longitudinal extension of the conveyor belt that is moved below the supporting framework 3.

In particular, the arm 15 is movable along an axis 7 which is part of the bridge 10 and is arranged transversely with respect to the pair of shoulders 4 and 5 that form the supporting framework 3 of the movement structure 1.

The bridge 10 is provided with compensation means adapted to be moved along a plane that is parallel to the plane on which the tool head or heads 2 move.

This allows to impart to the supporting framework 3 of the working tool axes an inertial load that is opposite with respect to the one that is the result of the displacement of the tool axes.

Conveniently, the compensation means defined above comprise at least one mass 9 which is adapted to be moved along a plane that is parallel to the movement plane of the tool heads 2.

The mass 9 is conveniently moved in a linear fashion and in the illustrated embodiment is constituted by a bar having a square cross-section.

The acceleration imparted to the mass 9 must be calculated in real time as a function of the specific reaction component of the inertial loads generated by the displacement of the tool axes.

Since the masses of the tool axes and the acceleration flow to be imparted to said axes to perform the required working are known, the machine control can thus calculate the optimum flow of acceleration to be imparted simultaneously to the compensation mass 9, without the need to measure the inertial loads to be compensated in order to provide a feedback control system.

In the illustrated embodiment, the tool axes are constituted by the tool head 2 that is moved, by means of the supporting arm 15, transversely with respect to the shoulders 4, 5 along the bridge 10.

In turn, the tool head 2 can move along the supporting arm 15 in a longitudinal direction with respect to the working surface of the machine.

Conveniently, the mass 9 is supported in its sliding by a linear guiding system 8. More particularly, the mass 9 conveniently slides along a fixed guiding channel 13 that is arranged at right angles to the direction of motion of the heads 2 along the respective arms 15.

The linear guide 8 is integral with the mass 9 and slides within carriages 14 which are integral with the bridge 10.

The mass 9 is actuated by movement means 11 constituted by a motor which, in the illustrated case, actuates a ball screw 12.

The motor is conveniently fixed to the guiding channel 13 within which the mass 9 slides.

This allows to minimize the total force that is the result of all the moving masses supported by the supporting structure 3.

In practice it has been found that the bridge for moving tools in numeric control machines according to the present invention fully achieves the intended aim and objects, since it allows to compensate the vibrations and/or oscillations that are imparted by the working heads to the supporting structures of the system of working axes, with consequent problems regarding the working precision caused by the relative displacement between the system of axes and the working surface on which the materials to be cut or worked in general are arranged.

The bridge according to the invention can be applied for example to a machine for cutting hides and the like.

The bridge thus conceived is susceptible of numerous modifications and variations, all of which are within the scope of the appended claims.

All the details may furthermore be replaced with other technically equivalent elements.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A structure (1) for moving tools in numeric control machines for the working of rigid and semirigid planar materials, comprising a supporting framework (3) adapted to be arranged in a position that lies above a working surface of a numeric control machine, the supporting framework (3) supporting at least one arm (15) for supporting a tool head (2), said arm (15) being movable along a bridge (10), said tool head (2) supporting at least one tool, **characterized in that** it comprises means (9) for compensating vibrations and/or oscillations that are a consequence of the accelerations caused by the movement of said at least one tool head (2), said compensation means (9) being movable along said bridge (10), on a plane that is parallel to a movement plane of said at least one tool head (2), said compensation means (9) comprising at least one mass (9) that is adapted to be moved in a direction that is parallel to the direction of motion of said arm (15) and is transverse with respect to the direction of motion of said at least one tool head (2) along said arm (15).

2. The structure according to claim 1, **characterized in that** said at least one tool head (2) is supported by said arm (15) so that it can move transversely with respect to said working surface of the machine, between a pair of shoulders (4, 5) of said supporting framework (3).

3. The structure according to claim 1 or 2, **characterized in that** said at least one mass (9) is actuated by movement means (11, 12).

4. The structure according to one or more of the preceding claims, **characterized in that** said at least one mass (9) is supported in its sliding by a linear guiding system (8) that is integral with said mass.

5. The structure according to one or more of the preceding claims, **characterized in that** said at least one mass (9) can move within a guiding channel (13).

6. The structure according to one or more of the preceding claims, **characterized in that** it is fixed with respect to said working surface of the machine.

7. The structure according to one or more of the preceding claims, **characterized in that** it is movable with respect to said surface of the machine.

8. A numeric control machine for working rigid and semirigid planar materials, **characterized in that** it comprises a structure (1) according to one or more of the preceding claims.

## Patentansprüche

1. Eine Struktur (1) zum Bewegen von Werkzeugen in numerisch gesteuerten Maschinen zur Bearbeitung von starren und halbstarren Flachmaterialien, die einen Stützrahmen (3) umfasst, ausgebildet, um in einer Position angeordnet zu werden, die oberhalb einer Arbeitsfläche einer numerisch gesteuerten Maschine liegt, wobei der Stützrahmen (3) mindestens einen Arm (15) zum Tragen eines Werkzeugkopfs (2) trägt, wobei der Arm (15) entlang einer Brücke (10) beweglich ist, wobei der Werkzeugkopf (2) mindestens ein Werkzeug trägt; **dadurch gekennzeichnet, dass** sie Mittel (9) zum Ausgleichen von Vibrationen und/oder Oszillationen umfasst, die eine Folge der durch die Bewegung des mindestens einen Werkzeugkopfs (2) verursachten Beschleunigungen sind; wobei die Ausgleichsmittel (9) entlang der Brücke (10) auf einer Ebene beweglich sind, die parallel zu einer Bewegungsebene des mindestens einen Werkzeugkopfs (2) ist; wobei die Ausgleichsmittel (9) mindestens eine Masse (9) umfassen, die ausgebildet ist, um in eine Richtung bewegt zu werden, welche parallel zur Bewegungsrichtung des Arms (15) und quer zur Bewegungsrichtung des mindestens einen Werkzeugkopfs (2) entlang dem Arm (15) ist.

2. Die Struktur gemäß Anspruch 1, **dadurch gekennzeichnet, dass** der mindestens eine Werkzeugkopf (2) so von dem Arm (15) getragen wird, dass er sich quer zu der Arbeitsfläche der Maschine, zwischen einem Paar von Schultern (4, 5) des Stützrahmens (3), bewegen kann.

3. Die Struktur gemäß Anspruch 1 oder 2, **dadurch gekennzeichnet, dass** die mindestens eine Masse (9) von Bewegungsmitteln (11, 12) angetrieben wird.

4. Die Struktur gemäß einem oder mehreren der obigen Ansprüche, **dadurch gekennzeichnet, dass** die mindestens eine Masse (9) in ihrem Gleiten von einem linearen Führungssystem (8) getragen wird, das integral mit der Masse ist.

5. Die Struktur gemäß einem oder mehreren der obigen Ansprüche, **dadurch gekennzeichnet, dass** die mindestens eine Masse (9) sich innerhalb eines Führungskanals (13) bewegen kann.

6. Die Struktur gemäß einem oder mehreren der obigen Ansprüche, **dadurch gekennzeichnet, dass** sie mit Bezug auf die Arbeitsfläche der Maschine fixiert ist.

7. Die Struktur gemäß einem oder mehreren der obigen Ansprüche, **dadurch gekennzeichnet, dass** sie mit Bezug auf die Fläche der Maschine beweglich ist.

8. Eine numerisch gesteuerte Maschine zur Bearbeitung von starren und halbstarren Flachmaterialien, **dadurch gekennzeichnet, dass** sie eine Struktur (1) gemäß einem oder mehreren der obigen Ansprüche umfasst.

## Revendications

1. Structure (1) pour déplacer des outils dans des machines à commande numérique pour l'usinage de matériaux plans rigides et semi-rigides, comprenant un cadre de support (3) apte à être agencé dans une position qui se trouve au-dessus d'une surface d'usinage d'une machine à commande numérique, le cadre de support (3) supportant au moins un bras (15) pour supporter une tête d'outil (2), ledit bras (15) étant mobile le long d'un pont (10), ladite tête d'outil (2) supportant au moins un outil, **caractérisé en ce qu'**elle comprend des moyens (9) pour compenser des vibrations et/ou des oscillations qui sont une conséquence des accélérations provoquées par le mouvement de ladite au moins une tête d'outil (2), lesdits moyens de compensation (9) étant mobiles le long dudit pont (10), sur un plan qui est parallèle à un plan de mouvement de ladite au moins une tête d'outil (2), lesdits moyens de compensation (9) comprenant au moins une masse (9) qui est apte à être déplacée dans un sens qui est parallèle au sens de mouvement dudit bras (15) et qui est transversal par rapport au sens de mouvement de ladite au moins une tête d'outil (2) le long dudit bras (15) .

2. Structure selon la revendication 1, **caractérisée en ce que** ladite au moins une tête d'outil (2) est supportée par ledit bras (15) de sorte qu'elle puisse se déplacer transversalement par rapport à ladite surface d'usinage de la machine, entre une paire d'épaulements (4, 5) dudit cadre de support (3).

3. Structure selon la revendication 1 ou 2, **caractérisée en ce que** ladite au moins une masse (9) est actionnée par des moyens de mouvement (11, 12)

4. Structure selon une ou plusieurs des revendications précédentes, **caractérisée en ce que** ladite au moins une masse (9) est supportée dans son coulissement par un système de guidage linéaire (8) qui est solidaire avec ladite masse.

5. Structure selon une ou plusieurs des revendications précédentes, **caractérisée en ce que** ladite au moins une masse (9) peut se déplacer à l'intérieur d'un canal de guidage (13).

6. Structure selon une ou plusieurs des revendications précédentes, **caractérisée en ce qu'**elle est fixe par rapport à ladite surface d'usinage de la machine.

7. Structure selon une ou plusieurs des revendications précédentes, **caractérisée en ce qu'**elle est mobile par rapport à ladite surface de la machine.

8. Machine à commande numérique pour l'usinage de matériaux plans rigides et semi-rigides, **caractérisée en ce qu'**elle comprend une structure (1) selon une ou plusieurs des revendications précédentes.
